# EUROPEAN PATENT APPLICATION

(11) **EP 4 617 854 A1**
(43) Date of publication of application: **17.09.2025**
(21) Application number: 24163563.0
(22) Date of filing: 14.03.2024
(51) Int. Cl.: G06F 8/10

(54) **SYSTEM AND METHOD FOR GENERATING USER STORIES BASED ON CUSTOMER REQUIREMENTS**

(71) Applicant: Siemens Aktiengesellschaft, 80333 München (DE)
(72) Inventor: PV, Hemanth, 676319 PARAPPANANGADI, Kerala (IN)
(74) Representative: HKW Intellectual Property PartG mbB

(57) **Abstract**

A method (600) for generating user stories based on customer requirements is disclosed. The method (600) comprises receiving (602) the customer requirements from one or more sources (104) and obtaining (604) one or more relevant parameters from the received customer requirements Further, the method (600) comprises generating (606) a user story for the received customer requirements and generating (608), by using a domain-based AI model, acceptance criteria for the generated user story. The method (600) also comprises determining (610) that the generated story meets the acceptance criteria. Further, the method (600) comprises implementing (612) the generated user story.

## Description

The present invention generally relates to user story generation, and more particularly relates to a system and a method for generating user stories based on customer requirements.

Customer requirements are the high-level requirements or expectations of stakeholders or end-users of a software product. Further, the customer requirements focus on the overall goals and objectives of the software product from the perspective of the end user or the business. Well-defined customer requirements play a vital role in understanding customer needs, aligning efforts, minimizing ambiguity, optimizing resources, satisfying customers, and measuring success of the software product. The customer requirements provide a foundation for creating valuable solutions and enhancing overall business performance.

Further, generating user stories from the customer requirements is a critical step ensuring that the software development and project management is closely aligned with the needs and goals of the customers. User stories are a means to capture the requirements and expectations of the end users or stakeholders of a system or software product. Furthermore, the user stories provide a concise description of a feature, functionality, or task that the software product is required to perform from the user's perspective.

Furthermore, to create well-defined user stories, it is important to follow best practices such as using a "As a [user], I want [goal], so that [benefit]" format. The above-mentioned format keeps the user stories small and manageable, prioritizing high-value features, and including clear acceptance criteria. Further, regular refinement and collaboration with stakeholders are also important to ensure that the user stories remain up-to-date and aligned with the project's goals.

Conventionally, the user stories are manually generated by the user based on the customer requirements. However, creating well-defined user stories can be challenging, especially when there are gaps or inconsistencies in the understanding of the customer requirements or expectations. A gap in the customer requirements may lead to a poorly defined user story. When there are gaps or missing information in the customer requirements, it becomes challenging to create a user story that accurately captures the desired functionality or user need. This can result in user stories that are unclear, incomplete, or do not align with the overall project objectives. However, these challenges can be overcome through effective communication, collaboration, and iterative refinement processes or a system. Further, manual generation of the user stories is a time consuming and tedious task which may be prone to error. Thus, there is a requirement for solutions to generate user stories automatically and efficiently from customer requirements and identify the gaps in the customer requirements.

Accordingly, there is a need for a system and method to overcome the above-identified issues.

According to one embodiment of the present invention, a method for generating user stories based on customer requirements is disclosed. The method comprises receiving the customer requirements from one or more sources. Further, the method comprises obtaining one or more relevant parameters from the received customer requirements by using a domain-based Artificial Intelligence (AI) model. The one or more relevant parameters comprise context of the received customer requirements, user goals, and system constraints. Further, the method comprises generating, by using the domain-based AI model, a user story for the received customer requirements based on the obtained one or more relevant parameters and one or more predefined formats. The one or more predefined formats comprise Independent, Negotiable, Valuable, Estimable, Small, and Testable (INVEST) criteria and Behaviour Driven Development (BDD) format. Furthermore, the method comprises generating, by using the domain-based AI model, acceptance criteria for the generated user story based on one or more criteria parameters. The method also comprises determining that the generated story meets the acceptance criteria. The acceptance criteria comprise one or more industrial practices, one or more predefined templates, or one or more predefined rules. Further, the method comprises implementing the generated user story. The disclosed method automatically and efficiently generates the user story from the customer requirements and automatically identify the requirement gaps in the customer requirements. Accordingly, the disclosed method saves time and efforts of the user by automatically and accurately generating the user story from the customer requirements.

In an embodiment, the method includes identifying, by using the domain-based AI model, requirement gaps in the received customer requirements, wherein the requirement gaps indicate missing information in the received customer requirements. Further, the method includes refining the generated user story and the generated acceptance criteria upon identification of the requirement gaps in the customer requirements. The disclosed method updates the generated user story based on the identified requirement gaps to enhance the accuracy of the generated user story.

In an embodiment, the method includes identifying, by using the domain-based AI model, one or more ambiguities in the received customer requirements by comparing the received customer requirements with one or more predefined standards. The one or more ambiguities comprise one or more of inconsistencies or conflicting requirements in the received customer requirements. The method includes generating, by using the domain-based AI model, the user story for the received customer requirements based on the obtained one or more relevant parameters, the one or more predefined formats, and the identified one or more ambiguities. The disclosed method enhances the accuracy of the user story by considering the obtained one or more relevant parameters, the one or more predefined formats, and the identified one or more ambiguities.

According to another embodiment of the present invention, a system for generating user stories from customer requirements is disclosed. The system includes a memory and one or more processors communicatively coupled to the memory. The memory includes programmable instructions executable by the one or more processors. The programmable instructions, when executed by the one or more processors, cause the one or more processors to perform one or more methods, as discussed throughout the present invention.

According to another embodiment of the present invention, an industrial environment is disclosed. The environment includes a system, as discussed throughout the present invention, and a plurality of human machine interfaces communicatively coupled to the system via a network. The system is configured to perform one or more methods, as discussed throughout the present invention.

According to another embodiment of the present invention, a computer-program product is disclosed. The computer-program product has machine-readable instructions stored therein, that when executed by one or more processors, cause the one or more processors to perform one or more methods, as discussed throughout the present invention.

To further clarify the advantages and features of the present invention, a more particular description of the invention will be rendered by reference to specific embodiments thereof, which are illustrated in the appended drawings. It is appreciated that these drawings depict only typical embodiments of the invention and are therefore not to be considered limiting of its scope. The invention will be described and explained with additional specificity and detail with the accompanying drawings.

These and other features, aspects, and advantages of the present invention will become better understood when the following detailed description is read with reference to the accompanying drawings in which like characters represent like parts throughout the drawings, wherein:
FIG. 1 illustrates a block diagram of an industrial environment comprising a system for generating user stories based on customer requirements, according to an embodiment of the present disclosure;
FIG. 2 illustrates a detailed block diagram of the system for generating the user stories based on the customer requirements, according to an embodiment of the present disclosure;
FIG. 3 illustrates a block diagram of a plurality of modules of the system shown in Figure 2, according to an embodiment of the present disclosure;
FIG. 4 illustrates a flow chart depicting the depicting an operation of the system for generating the user stories based on the customer requirements, according to an embodiment of the present disclosure;
FIG. 5 illustrates a graphical user interface screen depicting an operation of the system for generating the user stories based on the customer requirements, according to an embodiment of the present disclosure; and
FIG. 6 illustrates an exemplary process flow depicting a method for generating the user stories based on the customer requirements, according to an embodiment of the present disclosure.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the present invention. Furthermore, in terms of the construction of the device, one or more components of the device may have been represented in the drawings by conventional symbols, and the drawings may show only those specific details that are pertinent to understanding the embodiments of the present invention so as not to obscure the drawings with details that will be readily apparent to those of ordinary skill in the art having the benefit of the description herein.

For the purpose of promoting an understanding of the principles of the invention, reference will now be made to the various embodiments and specific language will be used to describe the same. It will nevertheless be understood that no limitation of the scope of the invention is thereby intended, such alterations and further modifications in the illustrated system, and such further applications of the principles of the invention as illustrated therein being contemplated as would normally occur to one skilled in the art to which the invention relates.

It will be understood by those skilled in the art that the foregoing general description and the following detailed description are explanatory of the invention and are not intended to be restrictive thereof.

Reference throughout this specification to "an aspect", "another aspect" or similar language means that a particular feature, structure, or characteristic described in connection with the embodiment is included in at least one embodiment of the present invention. Thus, appearances of the phrase "in an embodiment", "in another embodiment" and similar language throughout this specification may, but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

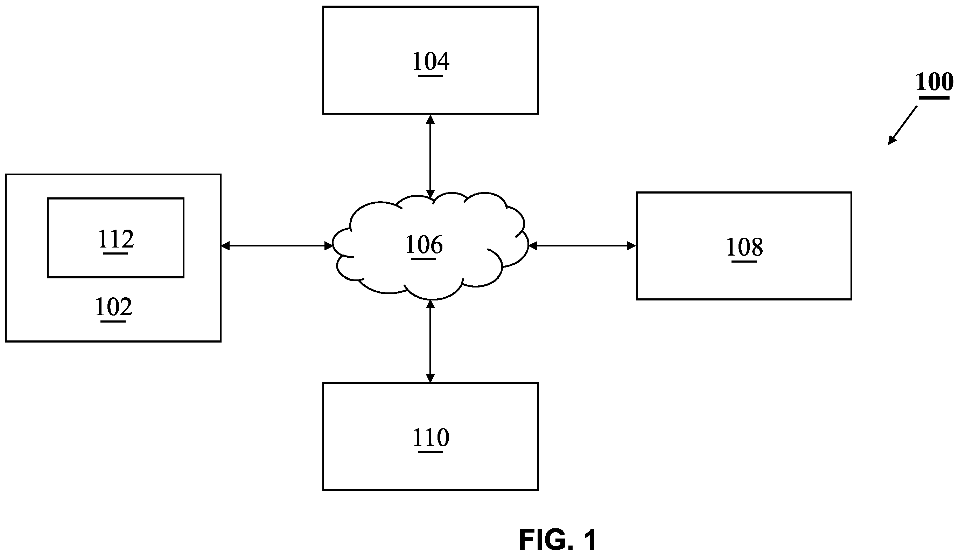

FIG. 1 illustrates a block diagram of an industrial environment 100 comprising a system 102 for generating user stories based on customer requirements, according to an embodiment of the present disclosure. As depicted, the industrial environment 100 includes the system 102 communicatively coupled to one or more sources 104 via a network 106. For example, the one or more sources 104 may be external databases, Application Programming Interfaces (APIs), Internet of Things (IoT) devices, public datasets, crowdsourcing, and the like. The industrial environment 100 includes a technical installation comprising one or more physical components 108. The one or more physical components correspond to a system or a setup that involves the deployment of hardware devices or equipment to achieve the generation of the user stories. In an embodiment, the one or more physical components 108 are part of the system 102. In an embodiment of the present disclosure, the one or more physical components 108 are configured to perform one or more functions including, but not limited to, data acquisition and storage, graphical display, and process control. In another embodiment of the present disclosure, the one or more physical components 108 are separate or external to the system 102.

Further, the industrial environment 100 includes a plurality of human machine interfaces 110 communicatively coupled to the system 102 via the network 106. In an embodiment, the plurality of human machine interfaces 110 enable a user to transmit and receive data from the system 102. For example, the user provides customer requirements to the system 102 via the plurality of human machine interfaces 110 to generate the user story.

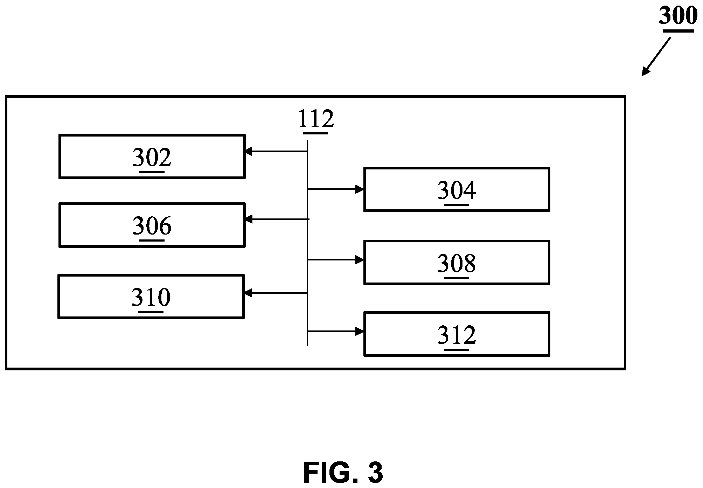

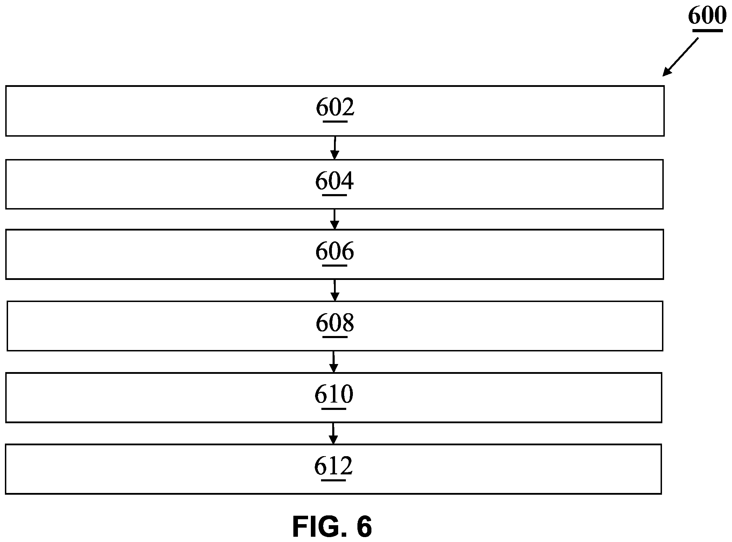

In an embodiment, the system 102 and the plurality of human machine interfaces 110 are hosted on one or more electronic devices. In an exemplary embodiment, the one or more electronic devices includes a laptop computer, a desktop computer, a smartphone, a wearable device, and the like. Further, the network 106 includes a wireless network or a wired network. For example, the network 106 corresponds to cellular networks or mobile networks, such as 3G, 4G, 5G, pre-5G, 6G network, or any other wireless communication network. Furthermore, the system 102 includes a plurality of modules 112 to perform one or more methods, as discussed throughout the present disclosure. The details on plurality of modules 112 have been elaborated in subsequent paragraphs at least with reference to FIG. 3. Further, the details on the method(s) performed by the system 102 have been elaborated in subsequent paragraphs at least with reference to FIG. 6.

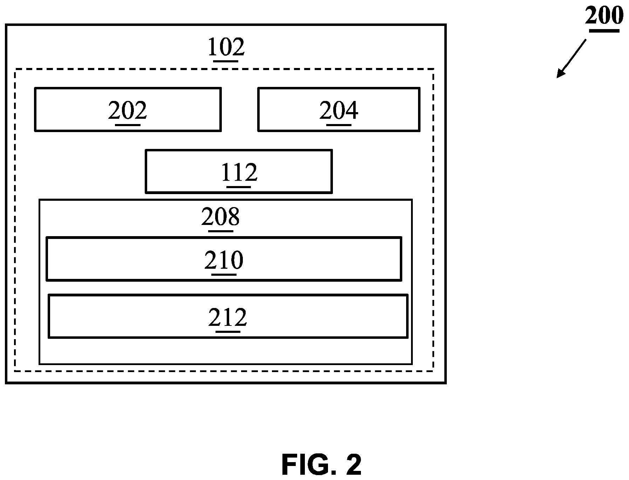

Furthermore, the system 102 is configured to generate user stories based on the customer requirements. In an embodiment of the present disclosure, the customer requirements are the high-level requirements or expectations of stakeholders or end-users of a software product. Further, the user stories are one or more features of the software product written from the perspective of an end user. The details on the system 102 have been elaborated in subsequent paragraphs at least with reference to FIG. 2.

FIG. 2 illustrates a detailed block diagram 200 of the system 102 for generating the user stories based on the customer requirements, according to an embodiment of the present disclosure.

The system 102 includes one or more processors/controllers 202, an Input/Output (I/O) interface 204, a plurality of modules 112, and a memory 208.

In an exemplary embodiment, the one or more processors/controllers 202 may be operatively coupled to each of the respective I/O interface, the plurality of modules 112, and the memory 208. In one embodiment, the one or more processors/controllers 202 may include at least one data processor for executing processes in a Virtual Storage Area Network. The one or more processors/controllers 202 may include specialized processing units such as integrated system (bus) controllers, memory management control units, floating point units, graphics processing units, digital signal processing units, etc. In one embodiment, the one or more processors/controllers 202 may include a Central Processing Unit (CPU), a Graphics Processing Unit (GPU), or both. The one or more processors/controllers 202 may be one or more general processors, digital signal processors, application-specific integrated circuits, field-programmable gate arrays, servers, networks, digital circuits, analog circuits, combinations thereof, or other now known or later developed devices for analyzing and processing data. The one or more processors/controllers 202 may execute a software program, such as code generated manually (i.e., programmed) to perform the desired operation. In an embodiment of the present disclosure, the processors/controllers 202 may be a general-purpose processor, such as the CPU, an Application Processor (AP), or the like, a graphics-only processing unit such as the GPU, a Visual Processing Unit (VPU), and/or an Artificial Intelligence (AI)-dedicated processor, such as a Neural Processing Unit (NPU).

Further, the one or more processors/controllers 202 control the processing of input data in accordance with a predefined operating rule or machine learning (ML) model stored in the non-volatile memory and the volatile memory. The predefined operating rule or the ML model is provided through training or learning.

Here, being provided through learning means that, by applying a learning technique to a plurality of learning data, a predefined operating rule or the ML model of a desired characteristic is made. The learning may be performed in the electronic device itself in which ML according to an embodiment is performed, and/or may be implemented through a separate server/system.

Furthermore, the ML model may consist of a plurality of neural network layers. Each layer has a plurality of weight values and performs a layer operation through the calculation of a previous layer and an operation of a plurality of weights. Examples of neural networks include but are not limited to, Convolutional Neural Networks (CNN), Deep Neural Networks (DNN), Recurrent Neural Networks (RNN), Restricted Boltzmann Machine (RBM), Deep Belief Networks (DBN), Bidirectional Recurrent Deep Neural Network (BRDNN), Generative Adversarial Networks (GAN), and deep Q-network.

The learning technique is a method for training a predetermined target device (for example, a robot) using a plurality of learning data to cause, allow, or control the target device to decide or predict. Examples of learning techniques include, but are not limited to, supervised learning, unsupervised learning, semi-supervised learning, or reinforcement learning.

The one or more processors/controllers 202 may be disposed in communication with one or more input/output (I/O) devices via the respective I/O interface 204. The I/O interface 204 may employ communication code-division multiple access (CDMA), high-speed packet access (HSPA+), global system for mobile communications (GSM), long-term evolution (LTE), WiMax, or the like, etc.

The one or more processors/controllers 202 may be disposed of in communication with a communication network via a network interface. In an embodiment, the network interface may be the I/O interface 204. The network interface may connect to the communication network to enable the connection of the electronic device with the other devices. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network may include, without limitation, a direct interconnection, local area network (LAN), wide area network (WAN), wireless network (e.g., using Wireless Application Protocol), the Internet, and the like.

In some embodiments, the memory 208 may be communicatively coupled to the one or more processors/controllers 202. The memory 208 may be configured to store data, and instructions executable by the one or more processors/controllers 202. The memory 208 may include but is not limited to, a non-transitory computer-readable storage media, such as various types of volatile and non-volatile storage media including, but not limited to, random access memory, read-only memory, programmable read-only memory, electrically programmable read-only memory, electrically erasable read-only memory, flash memory, magnetic tape or disk, optical media and the like. In one example, the memory 208 may include a cache or random-access memory for the one or more processors/controllers 202. In alternative examples, the memory 208 may be a part of the one or more processors/controllers 202, such as a cache memory of a processor, the system memory, or other memory. In some embodiments, the memory 208 may be an external storage device or database for storing data. The memory 208 may be operable to store instructions executable by the one or more processors/controllers 202. The functions, acts, or tasks illustrated in the figures or described may be performed by the programmed processor/controller for executing the instructions stored in the memory 208. The functions, acts, or tasks are independent of the particular type of instruction set, storage media, processor, or processing strategy and may be performed by software, hardware, integrated circuits, firmware, microcode, and the like, operating alone or in combination. Likewise, processing strategies may include multiprocessing, multitasking, parallel processing, and the like.

In some embodiments, the plurality of module may be included within the memory 208. The memory 208 may further include a system database 210 to store data. The plurality of modules 112 may include a set of instructions that may be executed to cause the system 102 to perform any one or more of the methods /processes disclosed herein. The plurality of modules 112 may be configured to perform the steps of the present disclosure using the data stored in the system database 210 for generating user stories based on customer requirements, as discussed herein. In an embodiment, each of the plurality of modules 112 may be a hardware unit that may be outside the memory 208. Further, the memory 208 may include an operating system 212 for performing one or more tasks of the system 102, as performed by a generic operating system in the communications domain. In one embodiment, the database may be configured to store the information as required by the plurality of modules 112 and the one or more processors/controllers 202 for generating user stories based on customer requirements.

In an embodiment of the present disclosure, at least one of the plurality of modules 112 may be implemented through the ML model. A function associated with the ML may be performed through the non-volatile memory, the volatile memory, and the one or more processors 202.

In an embodiment, the I/O interface 204 may enable input and output to and from the system 102 using suitable devices such as, but not limited to, a display, a keyboard, a mouse, a touch screen, a microphone, a speaker, and so forth.

Further, the present disclosure also contemplates a computer-readable medium that includes instructions or receives and executes instructions responsive to a propagated signal. Further, the instructions may be transmitted or received over the network via a communication port or interface or using a bus (not shown). The communication port or interface may be a part of the one or more processors/controllers 202 or may be a separate component. The communication port may be created in software or may be a physical connection in hardware. The communication port may be configured to connect with a network, external media, the display, or any other components in the electronic device, or combinations thereof. The connection with the network may be a physical connection, such as a wired Ethernet connection, or may be established wirelessly. Likewise, the additional connections with other components of the electronic device may be physical or may be established wirelessly. The network may alternatively be directly connected to the bus. For the sake of brevity, the architecture and standard operations of the operating system 212, the memory 208, the system database 210, the one or more processors/controllers 202, and the I/O interface 204 are not discussed in detail. In an embodiment, disclosed is a computer-program product, having machine-readable instructions stored therein, that when executed by one or more processors 202, cause the one or more processors 202 to perform one or more methods. The details on the method(s) performed by the one or more processors 202 have been elaborated in subsequent paragraphs at least with reference to FIG. 6.

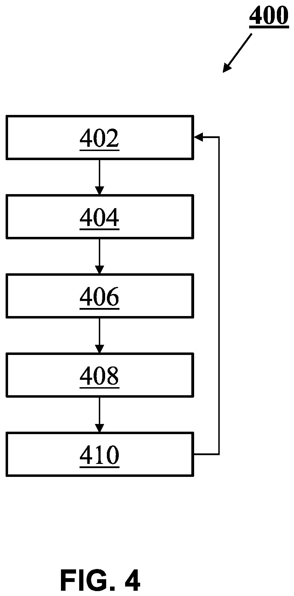

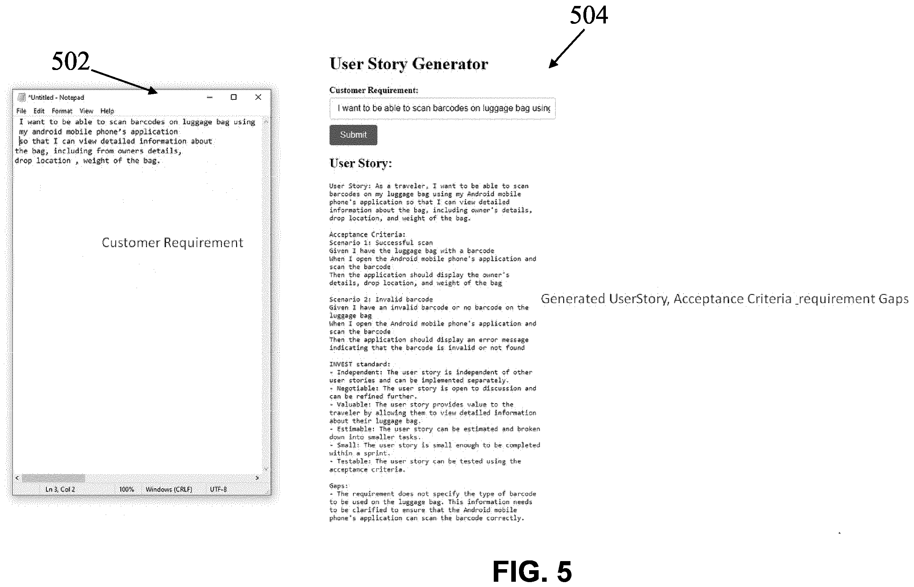

Details on the operation of the system 102 have been elaborated in subsequent paragraphs at least with reference to FIGS. 4, 5A, and 5B.

FIG. 3 illustrates a block diagram 300 of the plurality of modules 112 of the system 102 shown in Figure 2, according to an embodiment of the present disclosure. In an embodiment of the present disclosure, the plurality of modules 112 may include but is not limited to, a receiving module 302, an obtaining module 304, a generating module 306, a determining module 308, an implementing module 310, and a refining module 312. The plurality of modules 112 may be implemented by way of suitable hardware and/or software applications.

In an embodiment of the present disclosure, the receiving module 302 is configured to receive the customer requirements from the one or more sources 104. For example, the one or more sources 104 may be external databases, Application Programming Interfaces (APIs), Internet of Things (IoT) devices, public datasets, crowdsourcing, and the like.

Further, the obtaining module 304 is configured to obtain one or more relevant parameters from the received customer requirements by using a domain-based Artificial Intelligence (AI) model. For example, the domain-based AI model correspond to Large Language Models (LLMs) powered by advanced Natural Language Processing (NLP) techniques. In an exemplary embodiment of the present disclosure, the one or more relevant parameters include context of the received customer requirements, user goals, system constraints, and the like.

Furthermore, the generating module 306 is configured to generate, by using the domain-based AI model, a user story for the received customer requirements based on the obtained one or more relevant parameters and one or more predefined formats. In an embodiment of the present disclosure, the one or more predefined formats include Independent, Negotiable, Valuable, Estimable, Small, and Testable (INVEST) criteria and Behaviour Driven Development (BDD) format.

In an embodiment of the present disclosure, the domain-based AI model is trained on domain knowledge associated with the customer requirements and the user story is generated based on the trained domain-based AI model. The training process for the domain-based AI model involves exposing the domain-based AI model to a diverse set of documents, such that the trained domain-based AI model generates user stories, acceptance criteria, and identify requirement gaps. The set of documents include product descriptions, detailed insights into various products and their features, historical customer feedback, and comprehensive information specific to the domain. This comprehensive training results in the model's transformation from a standard version to a domain-specific one, equipped with the ability to comprehend and process intricate details within that domain. When prompted with domain-related questions, the trained model can provide insightful answers. Furthermore, the same domain-based AI model undergoes training in software engineering, particularly in agile standards. This training ensures that the domain-based AI model comprehends concepts such as user stories, acceptance criteria, and requirement gap identification. Consequently, when the system 102 receives the customer requirements from the field, the domain-based AI model can identify the context and generate the necessary output as requested by the logical layer.

Further, the domain-based AI model includes a logical layer on top which controls the behaviour of the domain-based AI model. The logical layer that can fine-tune the domain-based AI model's output is the logical driver layer. Further, the expected response schema or the structure associated with the domain-based AI model is set by this logical driver layer. The logical driver layer drives or fine tunes the domain-based AI model for a particular task, such as generation of the user story, identification of the acceptance criteria and requirement gaps.

Furthermore, the generating module 306 is configured to generate, by using the domain-based AI model, acceptance criteria for the generated user story based on one or more criteria parameters. In an embodiment of the present disclosure, the acceptance criteria are the specific conditions that the user story must meet to be considered complete and acceptable by the customers, stakeholders, or product owner. For example, the acceptance criteria include one or more industrial practices, one or more predefined templates, one or more predefined rules, or the like.

In an embodiment of the present disclosure, the determining module 308 is configured to determine that the generated story meets the acceptance criteria.

Furthermore, the implementing module (310) may be configured to implement the generated user story upon determining that the generated user story meets the acceptable criteria.

In an embodiment of the present disclosure, the refining module 312 may be configured to identify, by using the domain-based AI model, requirement gaps in the received customer requirements. In an embodiment of the present disclosure, the requirement gaps indicate missing information in the received customer requirements. Further, the refining module 312 may be configured to refine the generated user story and the generated acceptance criteria upon identification of the requirement gaps in the customer requirements.

Furthermore, the generating module 306 may be configured to identify, by using the domain-based AI model, one or more ambiguities in the received customer requirements by comparing the received customer requirements with one or more predefined standards. Further, the generating module 306 may be configured to generate, by using the domain-based AI model, the user story for the received customer requirements based on the obtained one or more relevant parameters, the one or more predefined formats, and the identified one or more ambiguities. In an embodiment of the present disclosure, the one or more ambiguities include one or more of inconsistencies or conflicting requirements in the received customer requirements.

FIG. 4 illustrates a flow chart 400 depicting the depicting an operation of the system 102 for generating the user stories based on the customer requirements, according to an embodiment of the present disclosure. The details on generating the user stories have been explained in detail with reference to at least with FIGS. 2 and 3.

As shown in FIG. 4, the system 102, at step 402, receives the customer requirements from the one or more sources 104. In an embodiment of the present disclosure, the one or more customer requirements are gathered and analyzed by the system 102 through direct communication with stakeholders or by reviewing existing documentation. Further, at step 404, the one or more customer requirements are converted into text format. In an embodiment of the present disclosure, the domain-based AI model (i.e., LLM model) is trained on a diverse range of data and possesses a deep understanding of human language, enabling it to comprehend and process the one or more requirements effectively.

Once the requirements are gathered, the domain-based AI model (i.e., LLM model) can be utilized to generate user stories automatically, at step 406. The LLM model is provided with the relevant information, such as the context, user goals, and system constraints, and the LLM model leverages its language generation capabilities to produce coherent and meaningful user stories. These user stories encapsulate the essence of the customer requirements in a format that is easy to understand and work with. The user storied are defined adhering to the INVEST criteria.

In addition to generating the user stories, the LLM model also assists in defining the acceptance criteria, at step 408. The acceptance criteria outline the conditions that must be met for a user story to be considered complete. The LLM model can analyze the user story and generate appropriate acceptance criteria based on industry best practices, predefined templates, or specific rules provided by the user/development team.

In an embodiment of the present disclosure, identifying requirement gaps or ambiguities in the customer requirements is a crucial part of the software development process. The LLM model may aid in the task of identifying requirement gaps or ambiguities at step 410 by performing a thorough analysis of the customer requirements and comparing them against established standards or known patterns. Further, the LLM model can flag any inconsistencies, missing information, or conflicting requirements, thereby helping the development team to identify and address potential requirement gaps early on.

Further, the the automated process performed by the system 102 is further enhanced by incorporating an iterative refinement step. The initial user stories and acceptance criteria generated by the LLM model can be reviewed by the project team and cross checked with customer and development team and refined based on their expertise and domain knowledge. This feedback loop helps improve the accuracy and relevance of the generated artifacts.

In operation, when a customer requirement is received from the field, the logical driver layer finetunes the domain-based AI model programmatically to generate a well-defined user story adhering to "INVEST" criteria and BDD format based on the received customer requirement. The domain-based AI model well versed with domain and software engineering adheres to the INVEST criteria. The INVEST criteria is in agile development representing a set of characteristics that contribute to well-defined and effective user stories.

In an embodiment of the present disclosure, the term 'independent' in the INVEST criteria represents that the user stories should be independent of each other, allowing for flexibility in prioritization and implementation. Further, the term 'negotiable' in the INVEST criteria represents that the customer requirements in the user stories should be negotiable to allow for collaboration and adjustment during the development stage of the software product. The term `valuable' in the INVEST criteria represents that each user story should deliver value to the end-users or stakeholders. Furthermore, the term 'estimable' in the INVEST criteria represents that the user stories should be clear and concise enough for the team to estimate the effort required for implementation of the software product. Furthermore, the term 'small' in the INVEST criteria represents that the user stories should be small enough to be completed within a single iteration, typically a sprint in agile development. The term 'testable' in the INVEST criteria represents that the user stories must be testable to ensure that the development team can verify that the implemented functionality of the software product meets the specified requirements. Adhering to these criteria, the domain-based AI model is requested by the logical driver layer to create user stories that are manageable, focused, and contribute to the overall success of agile projects. The domain-based AI model thus generates and converts the customer requirement into an output adhering to the given standards in a completely automated manner.

For example, when the customer requirement is passed to the solution (such as the requirement to develop a feature enabling service A to send and receive signals from service B for onboarding and offboarding data), the domain-based AI model can highlight requirement gaps in the given customer requirements. For instance, it may identify issues like the omission of details on the time taken for onboarding and offboarding and the absence of specifications regarding the maximum data that can be sent between the services. This ability stems from the domain-based AI model's understanding that both service A and service B have a timeout, leading to the cessation or interruption of data onboarding and offboarding. The domain-based AI model is also aware of specific data limits applicable to service A and service B. With this specialized knowledge, the domain-based AI model acting as an expert in the domain can effectively point out the requirement gaps during the analysis of the customer requirements.

FIG. 5 illustrates a graphical user interface screen depicting an operation of the system 102 for generating the user stories based on the customer requirements, according to an embodiment of the present disclosure. The details on generating the user stories have been explained in detail with reference to at least with reference to FIGS. 2 and 3.

As depicted, numeral 502 represents the customer requirement and numeral 504 represents the user story generated based on the customer requirement 502.

In a use-case scenario, the system 102 receives a customer requirement i.e., "I want to be able to scan barcodes on luggage bag using my mobile phone application so that I can view detailed information about the bag, including from owners' details, drop location, weight of the bag". Further, when the customer requirement is inputted to the system 102, the system 102 generates the user story i.e., "As a user, I want to be able to scan barcodes on luggage bags using my mobile phone application so that I can view detailed information about the bag, including the owner's details, drop location, and weight of the bag". Further, the system 102 also generates acceptable criteria, such as "given that I have the mobile phone application open, when I scan a barcode on a luggage bag, then the application should retrieve and display the owner's details", "given that I have the mobile phone application open, when I scan a barcode on a luggage bag, then the application should retrieve and display the drop location of the bag", and "given that I have the mobile phone application open, when I scan a barcode on a luggage bag, then the application should retrieve and display the weight of the bag".

Further, the system 102 generates multiple test scenarios. For example, for a scenario of successful barcode scan, the set of steps associated with the scenario are "given that I have the mobile phone application open", "when I scan a valid barcode on a luggage bag", and "then the application should retrieve and display the owner's details, drop location, and weight of the bag". Further, for a scenario of invalid barcode scan, the set of steps associated with the scenario are "given that I have the mobile phone application open", "when I scan an invalid or unrecognized barcode on a luggage bag", and "then the application should display an error message indicating the barcode is invalid". The system 102 also generates the requirement gaps, such as "the user story does not specify the supported mobile platforms for the application. This information is necessary to ensure compatibility and development efforts", "the user story does not mention any specific barcode scanning technology or library to be used. This decision needs to be made to determine the feasibility and implementation approach", "the user story does not clarify if the application should have offline functionality to retrieve and display bag information in case of no internet connectivity", "the user story does not mention any specific user interface requirements or design guidelines for displaying the bag information. This information is crucial for the development and user experience aspects", and "the user story does not address any potential security measures to protect the scanned bag information from unauthorized access or misuse. This aspect needs to be considered to ensure data privacy and protection".

FIG. 6 illustrates an exemplary process flow depicting a method 600 for generating the user stories based on the customer requirements, according to an embodiment of the present disclosure. The method 600 may be performed by the system 102, as shown in FIGS. 2 and 3.

At step 602, the method 600 comprises receiving the customer requirements from one or more sources 104. For example, the one or more sources 104 may be external databases, Application Programming Interfaces (APIs), Internet of Things (IoT) devices, public datasets, crowdsourcing, and the like.

At step 604, the method 600 comprises obtaining one or more relevant parameters from the received customer requirements by using a domain-based Artificial Intelligence (AI) model. In an exemplary embodiment of the present disclosure, the one or more relevant parameters include context of the received customer requirements, user goals, system constraints, and the like.

At step 606, the method 600 comprises generating, by using the domain-based AI model, a user story for the received customer requirements based on the obtained one or more relevant parameters and one or more predefined formats. In an exemplary embodiment of the present disclosure, the one or more predefined formats include Independent, Negotiable, Valuable, Estimable, Small, and Testable (INVEST) criteria and Behaviour Driven Development (BDD) format.

At step 608, the method 600 comprises generating, by using the domain-based AI model, acceptance criteria for the generated user story based on one or more criteria parameters. In an exemplary embodiment of the present disclosure, the acceptance criteria include one or more industrial practices, one or more predefined templates, one or more predefined rules, or the like.

In an embodiment of the present disclosure, the domain-based AI model is trained on domain knowledge associated with the customer requirements and the user story is generated based on the trained domain-based AI model.

At step 610, the method 600 comprises determining that the generated story meets the acceptance criteria.

At step 612, the method 600 comprises implementing the generated user story.

In an embodiment of the present disclosure, the method 600 includes identifying, by using the domain-based AI model, requirement gaps in the received customer requirements. The requirement gaps indicate missing information in the received customer requirements. Further, the method 600 includes refining the generated user story and the generated acceptance criteria upon identification of the requirement gaps in the customer requirements.

The method 600 also includes identifying, by using the domain-based AI model, one or more ambiguities in the received customer requirements by comparing the received customer requirements with one or more predefined standards. In an exemplary embodiment of the present disclosure, the one or more ambiguities include one or more of inconsistencies or conflicting requirements in the received customer requirements. Further, the method 600 includes generating, by using the domain-based AI model, the user story for the received customer requirements based on the obtained one or more relevant parameters, the one or more predefined formats, and the identified one or more ambiguities.

While the above steps shown in FIG. 6 are described in a particular sequence, the steps may occur in variations to the sequence in accordance with various embodiments of the present disclosure. Further, the details related to various steps of FIG. 6, which are already covered in the description related to FIGs. 1-5 are not discussed again in detail here for the sake of brevity.

The present invention provides for various technical advancements based on the key features discussed above. The present disclosure automatically and efficiently generates the user story from the customer requirements and automatically identify the gaps in the customer requirements. Accordingly, the disclosed method saves time and efforts of the user by automatically and accurately generating the user story from the customer requirements. The present disclosure updates the generated user story based on the identified requirement gaps to enhance the accuracy of the generated user story. Further, the present disclosure enhances the accuracy of the user story by considering the obtained one or more relevant parameters, the one or more predefined formats, and the identified one or more ambiguities.

While specific language has been used to describe the present subject matter, any limitations arising on account thereto, are not intended. As would be apparent to a person in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment.

### List of Reference

| | |
|---|---|
| Industrial Environment | 100 |
| System | 102 |
| One or more Sources | 104 |
| Network | 106 |
| One or more physical components | 108 |
| Plurality of human machine interfaces | 110 |
| Plurality of modules | 112 |
| Block diagram | 200 |
| one or more processors/controllers | 202 |
| Input/Output (I/O) interface | 204 |
| Memory | 208 |
| System Database | 210 |
| Operating System | 212 |
| Block Diagram | 300 |
| Receiving module | 302 |
| Obtaining module | 304 |
| Generating module | 306 |
| Determining Module | 308 |
| Implementing Module | 310 |
| Refining Module | 312 |
| Flow chart | 400 |
| Step of the flow chart | 402 |
| Step of the flow chart | 404 |
| Step of the flow chart | 406 |
| Step of the flow chart | 408 |
| Step of the flow chart | 410 |
| Customer requirement | 502 |
| User story | 504 |
| Method | 600 |
| Step of the method | 602 |
| Step of the method | 604 |
| Step of the method | 606 |
| Step of the method | 608 |
| Step of the method | 610 |
| Step of the method | 612 |

## Claims

1. A method (600) of generating user stories based on customer requirements, the method (600) comprising:
receiving (602) the customer requirements from one or more sources (104);
obtaining (604) one or more relevant parameters from the received customer requirements by using a domain-based Artificial Intelligence (AI) model;
generating (606), by using the domain-based AI model, a user story for the received customer requirements based on the obtained one or more relevant parameters and one or more predefined formats;
generating (608), by using the domain-based AI model, acceptance criteria for the generated user story based on one or more criteria parameters;
determining (610) that the generated story meets the acceptance criteria; and
implementing (612) the generated user story.

2. The method (600) according to claim 1, further comprising:
identifying, by using the domain-based AI model, requirement gaps in the received customer requirements, wherein the requirement gaps indicate missing information in the received customer requirements; and
refining the generated user story and the generated acceptance criteria upon identification of the requirement gaps in the customer requirements.

3. The method (600) according to claim 1, further comprising:
identifying, by using the domain-based AI model, one or more ambiguities in the received customer requirements by comparing the received customer requirements with one or more predefined standards; and
generating, by using the domain-based AI model, the user story for the received customer requirements based on the obtained one or more relevant parameters, the one or more predefined formats, and the identified one or more ambiguities.

4. The method (600) according to any of claims 1, 2, and 3, wherein:
the one or more relevant parameters comprise context of the received customer requirements, user goals, and system constraints, and
the one or more predefined formats comprise Independent, Negotiable, Valuable, Estimable, Small, and Testable (INVEST) criteria and Behaviour Driven Development (BDD) format.

5. The method (600) according to any of claims 1, 2, and 3, wherein the domain-based AI model is trained on domain knowledge associated with the customer requirements and the user story is generated based on the trained domain-based AI model.

6. The method (600) according to claim 3, wherein the one or more ambiguities comprise one or more of inconsistencies or conflicting requirements in the received customer requirements.

7. The method (600) according to claim 1, wherein the acceptance criteria comprise one or more industrial practices, one or more predefined templates, or one or more predefined rules.

8. A system (102) for generating user stories from customer requirements, the system (102) comprising:
a memory (208); and
one or more processors (202) communicatively coupled to the memory, wherein the memory (208) comprises a plurality of modules (112) in the form of programmable instructions executable by the one or more processors (202), and wherein the plurality of modules (112) comprises:
a receiving module (302) configured to receive the customer requirements from one or more sources (104);
an obtaining module (304) configured to obtain one or more relevant parameters from the received customer requirements by using a domain-based Artificial Intelligence (AI) model;
a generating module (306) configured to:
generate, by using the domain-based AI model, a user story for the received customer requirements based on the obtained one or more relevant parameters and one or more predefined formats; and
generate, by using the domain-based AI model, acceptance criteria for the generated user story based on one or more criteria parameters;
a determining module (308) configured to determine that the generated story meets the acceptance criteria; and
an implementation module configured to implement the generated user story.

9. The system (102) according to claim 8, wherein the plurality of modules (112) further comprise a refining module (312) configured to:
identify, by using the domain-based AI model, requirement gaps in the received customer requirements, wherein the requirement gaps indicate missing information in the received customer requirements; and
refine the generated user story and the generated acceptance criteria upon identification of the requirement gaps in the customer requirements.

10. The system (102) according to claim 8, wherein the generating module (306) is configured to:
identify, by using the domain-based AI model, one or more ambiguities in the received customer requirements by comparing the received customer requirements with one or more predefined standards; and
generate, by using the domain-based AI model, the user story for the received customer requirements based on the obtained one or more relevant parameters, the one or more predefined formats, and the identified one or more ambiguities.

11. The system (102) according to any of claims 8, 9, and 10, wherein the one or more relevant parameters comprise context of the received customer requirements, user goals, and system constraints, and wherein the one or more predefined formats comprise Independent, Negotiable, Valuable, Estimable, Small, and Testable (INVEST) criteria and Behaviour Driven Development (BDD) format.

12. The system (102) according to any of claims 10, wherein the one or more ambiguities comprise one or more of inconsistencies or conflicting requirements in the received customer requirements.

13. The system (102) according to claim 10, wherein the acceptance criteria comprise one or more industrial practices, one or more predefined templates, or one or more predefined rules.

14. An industrial environment comprising:
a system (102) according to claims 8 - 13;
a technical installation comprising one or more physical components (108); and
a plurality of human machine interfaces (110) communicatively coupled to the system (102) via a network, wherein the system (102) is configured to perform a method according to any of the claims 1 to 7.

15. A computer-program product, having machine-readable instructions stored therein, that when executed by one or more processors (202), cause the one or more processors (202) to perform a method according to any of the claims 1-7.
